# EUROPEAN PATENT SPECIFICATION

(11) **EP 3 981 133 B1**
(45) Date of publication and mention of the grant of the patent: **25.09.2024**
(21) Application number: 19938401.7
(22) Date of filing: 22.07.2019
(51) Int. Cl.: H04L 41/0894, H04L 41/5025, H04L 45/302, H04L 47/80, H04L 45/64, H04L 67/61, H04L 45/50, H04L 47/83, H04L 41/0895, H04L 47/62, H04L 43/0817

(54) **CONTROL DEVICE, SWITCH DEVICE, METHODS AND COMPUTER-READABLE STORAGE MEDIUM**
STEUERVORRICHTUNG, SCHALTVORRICHTUNG, VERFAHREN UND COMPUTERLESBARES SPEICHERMEDIUM
DISPOSITIF DE COMMANDE, DISPOSITIF COMMUTATEUR, PROCÉDÉS ET MOYEN DE STOCKAGE LISIBLE PAR ORDINATEUR

(43) Date of publication of application: 13.04.2022
(73) Proprietor: HUAWEI TECHNOLOGIES CO., LTD., Shenzhen, Guangdong 518129 (CN)
(72) Inventor: MEDAGLIANI, Paolo, 92210 Saint Cloud (FR); MARTIN, Sebastien, 92100 Boulogne Billancourt (FR); CHEN, Shuang, Beijing, Beijing 100080 (CN); LEGUAY, Jeremie, 93260 Les Lilas (FR)
(74) Representative: Grünecker Patent- und Rechtsanwälte PartG mbB
(86) International application number: PCT/IB2019/000784
(87) International publication number: WO 2021/014180

(56) References cited:
- CN-A- 101 951 683
- US-A1- 2015 207 677
- US-A1- 2018 103 094
- WANG LEI ET AL: "S5: An Application Sensitive QoS Assurance System via SDN", 2018 IEEE 37TH INTERNATIONAL PERFORMANCE COMPUTING AND COMMUNICATIONS CONFERENCE (IPCCC), IEEE, 17 November 2018 (2018-11-17), pages 1 - 8, XP033548766, DOI: 10.1109/PCCC.2018.8710838

## Description

### TECHNICAL FIELD

The present disclosure relates to methods, devices and computer readable storage medium comprising instructions for transmission of data from a source to a destination via one or more nodes in a software-programmable network.

### BACKGROUND

Software programmable networks may offer services of guaranteed quality. The most commonly used approach to configure a software programmable network is to use a centralized control entity, which uses remote management to configure network features. A data stream is transmitted from a source node of the network to a destination node of the network via intermediate nodes according to the configuration of the centralized control entity.

Deterministic Networking (DetNet) and Time-Sensitive Networking (TSN) have been conceived to guarantee the required Quality of Service (QoS) using an IP-based network infrastructure. Said software programmable network may, in addition to traffic of guaranteed QoS, offer a service class without a guaranteed QoS, but rather according to a best-effort (BE) approach. The distribution of network resources between QoS service and BE service is configured by the centralized control entity.

US 2015/0207677 A1 discloses subscriber management and network service integration for software designed access/aggregation network in which a centralized controller provides seamless end-to-end service from a core-facing edge of a service provider network through aggregation and access infrastructure out to access nodes located proximate to endpoints such as subscriber devices. The controller operates to provide a central configuration point for configuring access nodes and aggregation nodes of an access/aggregation network of the service provider to provide transport services to transport traffic between access nodes and edge routers on opposite borders of the aggregation network. A control channel between an access node and the controller is dynamically established the access node and the controller can exchange various control messages using a dynamically established control channel for subscriber management and network service integration. In particular, the controller can use the MPLS-OCC protocol to provision paths with per Class of Service (CoS) policers to maintain QoS and fair network usage wherein the MPLS-OCC protocol also supports the provisioning of schedulers on the ports carrying the paths based on the bandwidth, scheduling discipline and buffer requirements per CoS. Network services applications request paths in a path computation domain controlled by the controller, wherein a path request includes a required bandwidth or other constraint and two endpoints representing an access node and an edge node that communicate over the path computation domain managed by controller. Path requests may further specify time/date during which paths must be operational and CoS parameters, for instance, bandwidth required per class for certain paths.

However, as the configuration of software programmable networks is rather inflexible, further improvement is required.

### SUMMARY

Embodiments of the present invention provide apparatuses, methods and computer readable storage medium comprising instructions for dynamic resource reconfiguration in a software programmable network supporting traffic of guaranteed quality of service (QoS), and best-effort (BE) traffic according to a demand for service and reducing jitter or packet loss.

The foregoing and other objects are achieved by the subject matter of the independent claims. Further implementation forms are apparent from the dependent claims, the description and the figures.

Provided is a control device for a software programmable network including one or more nodes and supporting traffic of guaranteed quality of service (QoS) and best-effort (BE) traffic with a predetermined resource distribution between guaranteed QoS and BE service classes . The control device is defined in independent claim 1.

Providing a new configuration indicating a different partitioning of resources between QoS traffic and BE traffic facilitates for an improved acceptance of demands for QoS service, wherein by providing a label distribution sequence for the entry nodes of the network facilitates for reducing jitter and/or packet loss that might be introduced, for instance, by the reconfiguration of resources.

For example, QoS relates to a maximum delay or latency for end-to-end (E2E) transmission of a packet from a source to a destination and/or bounded jitter.

In some embodiments, the new configurations indicate a repartition of queues configured for guaranteed QoS and BE service classes.

Changing the number of queues of the nodes of the network facilitates for dynamic reconfiguration of the resources configured for QoS and BE traffic.

In some embodiments, the control device according to the first or second aspect is provided, wherein the new configurations indicate a repartition of bandwidth for guaranteed QoS and BE service classes.

For instance, the bandwidth partitioning may relate to partitioning of a cycle period in a time-sensitive network between QoS and BE traffic, wherein assigning different amounts of transmission time to either time-critical (QoS) or BE traffic facilitates for accepting additional demands for QoS traffic or providing resources not used for QoS traffic to BE traffic.

In some embodiments, the processing circuitry is configured to calculate a reconfiguration sequence indicating one or more configurations with associated second activation timing information for each node. Further, the transceiver is configured to transmit the reconfiguration sequences to respective nodes.

In some embodiments, the transceiver is configured to receive utilization data from the one or more nodes. Further, the processing circuitry is configured to determine the new resource distribution on basis of the received utilization data.

Determining the new resource distribution on basis of the received utilization data facilitates for performing the dynamic reconfiguration of resources according to a current actual utilization of ports of the nodes of the network. For example, the determination of the resource reconfiguration may be based on utilization statistics according to utilization data received from nodes of the network.

In some embodiments, the processing circuitry is configured to determine a current and/or future demand for QoS service, and to determine the new resource distribution according to the determined current and/or future demand.

Determining a current and/or future demand for QoS service and setting the new resource distribution between QoS and BE traffic accordingly facilitates for increased acceptance of demands for service of guaranteed quality.

In some embodiments, the transceiver is configured to receive a reconfiguration request from one of the one or more nodes. Further, the processing circuitry is configured to determine the new resource distribution when the reconfiguration request is received.

Further provided is a switch device for operating as a node in a software programmable network including one or more nodes and supporting traffic of guaranteed quality of service, QoS, and best-effort, BE, traffic with a predetermined resource distribution between guaranteed QoS and BE service classes. The switch device is defined in independent claim 8.

In some embodiments, the transceiver is configured to receive a reconfiguration sequence indicating a sequence of one or more configurations with associated second activation timing information. Further, the processing circuitry is configured to set the one or more configurations indicated by the reconfiguration sequence as the current configuration according to the associated second activation timing information.

In some embodiments, the processing circuitry is configured to monitor a port utilization; and the transceiver is configured to transmit utilization data to the control device indicating the port utilization. In some embodiments, the processing circuitry is configured to monitor a port utilization; and determine whether a new resource distribution between guaranteed QoS and BE service classes is required. Further, the transceiver is configured to transmit a reconfiguration request to the control device.

Further provided is a method for dynamic resource reconfiguration in a software programmable network including one or more nodes and supporting traffic of guaranteed quality of service (QoS) and best-effort (BE) traffic with a predetermined resource distribution between guaranteed QoS and BE service classes. The method The method is defined in the independent claim 12.

Further provided is a method for dynamic resource reconfiguration in a software programmable network including one or more nodes and supporting traffic of guaranteed quality of service, QoS, and best-effort, BE, traffic with a predetermined resource distribution between guaranteed QoS and BE service classes. The method is performed in independent claim 13.

Further provided is a computer-readable storage medium comprising instructions, which, when executed by a computer, cause the computer to carry out the steps of any of the provided method or any possible embodiment of the provided method. The method is defined in independent claim 14.

Any of the methods mentioned above may be implemented as a software code including the code instructions, which implement the above-mentioned method steps. The software may be stored in a computer readable medium. The medium may be a processor memory, any storage medium or the like. The software may be used in devices such as control device or switch referred to above.

Details of one or more embodiments are set forth in the accompanying drawings and the description below. Other features, objects, and advantages will be apparent from the description, drawings, and claims.

### BRIEF DESCRIPTION OF THE DRAWINGS

In the following embodiments of the invention and examples not being part of the present invention are described in more detail with reference to the attached figures and drawings, in which:
- **Fig.1**: illustrates a deterministic network (DetNet) domain providing interconnection between two TSN domains.
- **Fig. 2**: illustrates a deterministic network (DetNet) domain providing end-to-end deterministic networking.
- **Fig. 3**: shows details on queue distribution between traffic with guaranteed quality of service and best-effort service according to a cyclic queuing and forwarding (CSQF) implementation.
- **Fig. 4**: is an illustration of bandwidth repartition between traffic with guaranteed quality of service and best-effort service according to a CSQF implementation.
- **Fig. 5**: illustrates dynamic reconfiguration of resource distribution among traffic with guaranteed quality of service and best-effort traffic by changing the respective number of queues.
- **Fig. 6**: illustrates dynamic reconfiguration of resource distribution among traffic with guaranteed quality of service and best-effort traffic by changing the bandwidth repartition.
- **Fig. 7**: illustrates a situation where an increased number of queues for traffic with guaranteed quality of service may facilitate accepting additional demands while reducing packet loss.
- **Fig. 8**: illustrates a situation where a reconfiguration of bandwidth distribution facilitates for accepting additional demands for traffic with guaranteed quality of service.
- **Fig. 9a**: illustrates an initial situation before reconfiguration of resource distribution between traffic of guaranteed quality of service and best-effort traffic.
- **Fig. 9b**: exemplarily illustrates introduction of additional jitter in a case where a number of queues configured for traffic with guaranteed quality of service is increased without consideration of a label distribution sequence.
- **Fig. 9c**: exemplarily illustrates reconfiguration of resources by changing the repartition of queues for traffic with guaranteed quality of service and best-effort traffic while providing a label distribution sequence so as to reduce jitter according to an embodiment.
- **Fig. 10**: is a diagram illustrating a controller and node architecture of DetNet/TSN-enabled devices.
- **Fig. 11**: is a flow diagram of a method, for a control device, for dynamic resource reconfiguration in a software programmable network according to an embodiment.
- **Fig. 12**: is a flow diagram of a method, for a switch device, for dynamic resource reconfiguration in a software programmable network according to an embodiment.
- **Fig. 13**: is a schematic diagram illustrating messages transmitted between nodes and a control device of a software-programmable network for dynamic reconfiguration of resources.
- **Fig. 14**: is an exemplary structure of a message supporting a segment routing configuration.
- **Fig. 15**: is an exemplary structure of a Stateful PCE request Parameters object including a timestamp parameter according to an example not being part of the present invention.
- **Fig. 16**: is a flow diagram of a method for a reconfiguration planning algorithm according to an example not being part of the present invention.
- **Fig. 17a**: illustrates a routing and scheduling algorithm for computing a path for a demand using a depth-first search algorithm without scheduling.
- **Fig. 17b**: illustrates a routing and scheduling algorithm for computing a path for a demand using a depth-first search algorithm by considering replicas of each mode according to the number of available queues of the respective nodes according to an example not being part of the present invention.
- **Fig. 18**: illustrates a routing and scheduling algorithm for computing a path for a demand to solve the multi-commodity problem according to an example not being part of the present invention.

In the following, identical reference signs refer to identical or at least functionally equivalent features if not explicitly specified otherwise.

### DETAILED DESCRIPTION OF THE EMBODIMENTS

In the following description, reference is made to the accompanying figures, which form part of the disclosure, and which show, by way of illustration, specific aspects of embodiments of the invention or specific aspects in which embodiments of the present invention may be used. It is understood that embodiments of the invention may be used in other aspects and comprise structural or logical changes not depicted in the figures. The following detailed description, therefore, is not to be taken in a limiting sense, and the scope of the present invention is defined by the appended claims.

For instance, it is understood that a disclosure in connection with a described method may also hold true for a corresponding device or system configured to perform the method and vice versa. For example, if one or a plurality of specific method steps are described, a corresponding device may include one or a plurality of units, e.g. functional units, to perform the described one or plurality of method steps (e.g. one unit performing the one or plurality of steps, or a plurality of units each performing one or more of the plurality of steps), even if such one or more units are not explicitly described or illustrated in the figures. On the other hand, for example, if a specific apparatus is described based on one or a plurality of units, e.g. functional units, a corresponding method may include one step to perform the functionality of the one or plurality of units (e.g. one step performing the functionality of the one or plurality of units, or a plurality of steps each performing the functionality of one or more of the plurality of units), even if such one or plurality of steps are not explicitly described or illustrated in the figures. Further, it is understood that the features of the various exemplary embodiments and/or aspects described herein may be combined with each other, unless specifically noted otherwise.

### Deterministic Networking/Time Sensitive Networking

Deterministic Networking (DetNet) and Time Sensitive Networking (TSN) have been conceived to guarantee required Quality of Service (QoS), intended as bounded latency and jitter, to time-critical applications using a single converged IP-based network infrastructure. The latency is defined as the time interval between the transmission of a packet at the source node and the reception of the same packet at the destination. The jitter is defined as the variation of end-to-end (E2E) delay between consecutive packets. The considered network supports critical services with guaranteed QoS and Best-Effort services (BE).

A deterministic Networking Architecture is described, for instance, in N. Finn et al.: "Deterministic Networking Architecture draft-ietf-detnet-architecture-13", version 13, May 2019, Internet Engineering Task Force. Deterministic networking (DetNet) provides a capability to carry specified unicast or multicast data flows for real-time applications with low data loss rates and bounded latency within a network domain. That is, deterministic means that the location of packets is desired to be deterministic at any time within the network.

Techniques used include: 1) reserving data plane resources for individual (or aggregated) DetNet flows in some or all of the intermediate nodes along the path of the flow; 2) providing explicit routes for DetNet flows that do not immediately change with the network topology; and 3) distributing data from DetNet flow packets over time and/or space to ensure delivery of each packet's data in spite of the loss of a path. DetNet operates at the IP layer and delivers service over lower layer technologies such as MPLS /Multiprotocol Label Switching and IEEE 802.1 Time-Sensitive Networking (TSN). Time Sensitive Networks (TSNs) are typically employed in industrial applications such as production plants and automotive requiring high reliability and safety, as well as low delay.

Best effort (BE) service describes a network service in which the network does not provide any guarantee that data is delivered or that delivery meets any quality of service. In a best effort network, all users obtain best-effort service, meaning that they obtain unspecified variable bit rate, latency and packet loss, depending on the current traffic load.

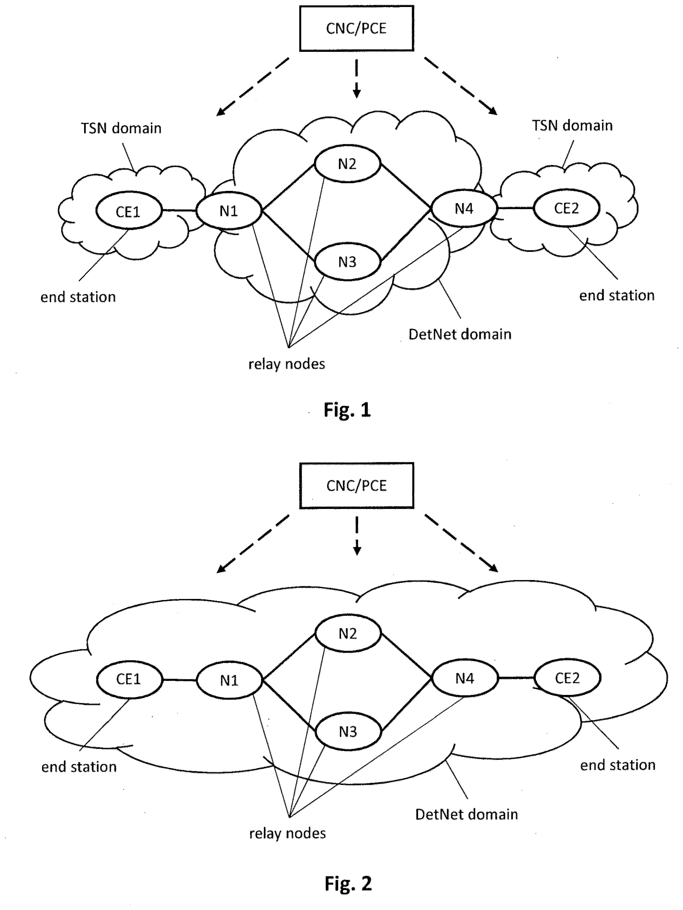

Fig. 1 illustrates a deterministic network (DetNet) domain providing interconnection between two Time Sensitive Network (TSN) domains.
Fig. 2 illustrates a deterministic network (DetNet) domain providing end-to-end deterministic networking.

As shown in Figs. 1 and 2, a DetNet network can be used to provide either interconnection of TSN islands or end-to-end deterministic networking. Three configuration models are possible: centralized, distributed, and hybrid. In fully centralized mode, critical services paths are routed and scheduled by a Centralized Network Controller (CNC) for TSN or a Path Computation Element (PCE) for DetNet.

Information in the network is transmitted from a talker node, which may be an entry node to the network like end station CE1, to a listener node, which may be another entry node to the network like end station CE2, via intermediate or relay nodes N1-N4 that are configured by amanagement node. The intermediate nodes N1-N4 act as switches connecting devices on a network by using packet switching to receive, process, and forward data to the destination or listener nodes. The switches can be interconnected in various ways. This may lead to different possible paths for the transmission of information from a talker node to a listener node. The management node in this example includes a Centralized Network Controller CNC or a Path Computation Element PCE. As mentioned above, the CNC/PCE performs the configuration of the network nodes.

Information pertaining to a flow from a particular talker to a particular listener often need to be sent periodically. A flow may define a periodic data transfer that occurs from a talker node to a listener node with pertaining requirements. The CNC/PCE searches for a solution that guarantees timeliness of delivery for all registered flows. This may be done by the CNC/PCE. A solution can be called configuration or schedule for the network and, in particular, respective network entities. When a schedule for the whole network is decided upon, a configuration for each switch can be created.

Typically, traffic is scheduled according to such a configuration which predefines for each flow all the times when packets pertaining to the flow that are stored in a queue in a node are to be transmitted, and to which node they are to be transmitted. Different schemes can be used to map traffic to queues. For example, traffic can be prioritized and packets from each traffic class can be mapped to the corresponding queues.

However, besides the traffic that is registered with the CNC, unscheduled traffic may be transmitted through the same network. Usually the scheduled traffic has the highest priority in the network, and unscheduled traffic can only use resources that are not configured for the scheduled traffic with guaranteed QoS.

In the following, the expressions "traffic with guaranteed QoS", "QoS traffic" and "DetNet/TSN traffic" are used in a synonymous matter to indicate traffic according to a service class with guaranteed quality.

Further, although in the following reference is made to DetNet/TSN networking, the present disclosure is not limited thereto. DetNet/TSN networking may be considered as specific implementations of a network, whose scheduling and partitioning of resources for different service classes may be configured by software, i.e. software programmable networks. That is, a software programmable network is a network in which the behavior of network devices and flow control may be handled by software that operates independently from the network hardware.

### Cycle Specific Queuing and Forwarding

One of the most promising current solutions used to implement resource reservation and QoS guarantee is given in the CSQF (Cycle Specific Queuing and Forwarding) standard, which leverages on the presence of eight transmission queues inside each port of each node of the network. Details on CSQF can be found in M-Chen et al.: "Segment Routing (SR) Based Bounded Latency draft-chen-detnet-sr-based-bounded-latency-01", version 1, May 7, 2019. In the default configuration recommended by the standard, three queues are statically associated to DetNet/TSN traffic with guaranteed QoS, while the remaining five queues are statically used for best effort (unscheduled) traffic.

The main alternative to CSQF available in the literature is P802.1Qch Cyclic Queuing and Forwarding (CQF) protocol, which is the basis from which the CSQF protocol has been derived. Differently from CSQF, in CQF the packets received in a cycle are transferred at the next transmission cycle, i.e., there is no possibility of scheduling of packets inside nodes. This limitation reduces the potential dynamic reconfiguration given by the presence of multiple queues.

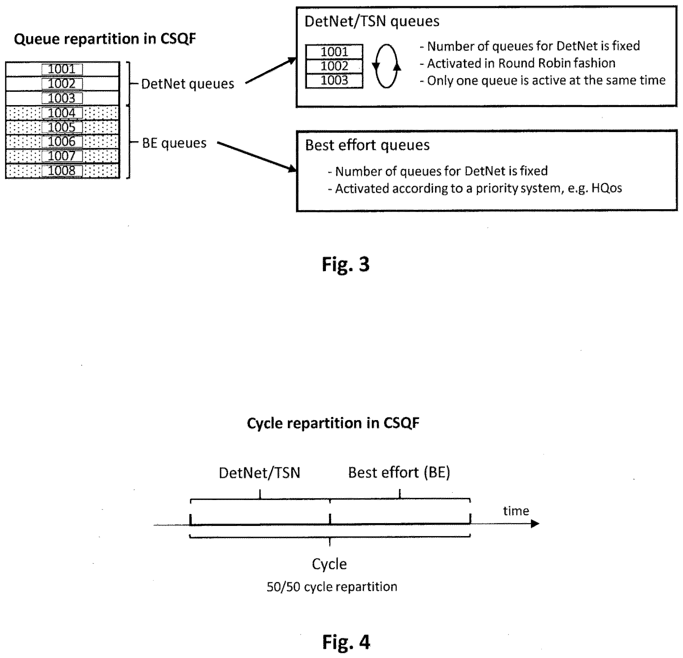

Figs. 3 and 4 illustrate details of resource repartition between traffic with guaranteed QoS and BE traffic according to a CSQF implementation. Fig. 3 shows details on queue distribution and Fig. 4 illustrates bandwidth repartition between traffic with guaranteed quality of service and best-effort service.

As shown in Fig. 3, three queues are reserved for traffic with guaranteed QoS, and five queues are reserved for BE traffic. The three queues reserved for time guaranteed traffic are activated in a round robin fashion (i.e., one queue has its gate opened for transmission and closed for reception, while the other two have their gates closed for transmission and opened for reception). During the period of activation, the transmitting queue sends all the packets stored during the previous reception phase. Any incoming packet can be inserted only in one of the two queues in reception mode. The specification of which queue a packet is inserted into is referred to as scheduling. The queues associated with BE traffic are managed according to a priority system, for instance according to the HQoS protocol. HQoS (Hierarchical Quality of Service) is a QoS technology that hierarchically controls services and users. Details thereof can be found, for instance, in "Huawei HQoS Technical White Paper", Huawei Technologies Co., Ltd., 2010. For each outgoing port, i.e., for each link, eight queues are available in total. This is referred to as routing.

In order to provide a fair repartition of resources between time sensitive (DetNet/TSN) and best effort traffic, the time is divided into cycles. As shown in Fig. 4, each cycle is divided in two parts: the former, with guaranteed resources, is reserved to time critical traffic, while the second, based on contention protocols, is reserved to best effort traffic. The standard repartition of resources is 50/50.

Inside the time critical activity period, the performance guarantee is achieved by providing a routing and scheduling solution for each packet of the time critical flow. Given the packet size and the packet transmission frequency (which may be referred to, in a more general manner, as the packet transmission pattern), it is possible to map in which queue and on which transmission port the packet will be sent, by respecting the capacity of each port. The capacity of each port may be expressed in terms of packets that can be sent within a cycle without introducing losses or latency.

CSQF leverages on Segment Routing (SR). In a segment routed network, an entry node may perpend a header to packets that contains a list of segments or labels, which represent instructions that are to be executed on subsequent nodes in the network. These instructions may be forwarding instructions, such as an instruction to forward a packet to a specific destination, interface and/or, in particular, to a specific queue of a port of a network node.

As CSQF leverages on Segment Routing (SR), once the routing and scheduling are decided by the controller, this latter assigns a set of labels (implemented as Segment Routing IDs-SIDs) to each flow in order to instruct the DetNet/TSN-enabled nodes on the chosen path and scheduling instant. Each intermediary node consumes its SR label, which allows to map rigidly the transmission cycle and the transmission port to each cycle.

As the transmission time is divided into cycles, it is possible to guarantee the deterministic transmission of packets as long as the processing delay (i.e., the time spent inside a node) is known. In CSQF, this is possible by considering a statistical upper bound on the processing delay on each packet that is forwarded by DetNet-enabled node.

In the remaining of this document, it will be leveraged on CSQF in order to provide some examples of the present disclosure. However, the present invention is not limited to the CSQF protocol, but may be applied to CQF or another protocol as well..

A limitation of the static configuration approach according to CSQF is that all the configurations (i.e., queue distribution and bandwidth distribution) are statically configured, such that the configuration may not be suitable for a current or future traffic condition.

In the current implementation of CSQF, the decisions taken from the controller are statically implemented inside the nodes. However, as traffic may evolve during time (i.e., new services arrive, old services disappear or QoS requirements are altered), the original configuration may be no longer valid or inaccurate as it could lead to the reject of traffic.

### Dynamic Reconfiguration of resource distribution

According to the present disclosure, the resource distribution between time-critical and BE traffic may be reconfigured, in order to adapt it to a current or predicted scenario. The peculiarity of time-critical applications is that, during the reconfiguration phase, it is advantageous to ensure that packet loss or additional jitter is reduced for the packet. For such a reason, according to the present disclosure a sequence of reconfigurations as well as their specific activation instant is defined.

That is, according to the present disclosure, the resource distribution between QoS and BE service classes of a software programmable network may be changed in order to allow for adaption of the network according to a current and/or predicted demand for QoS service.

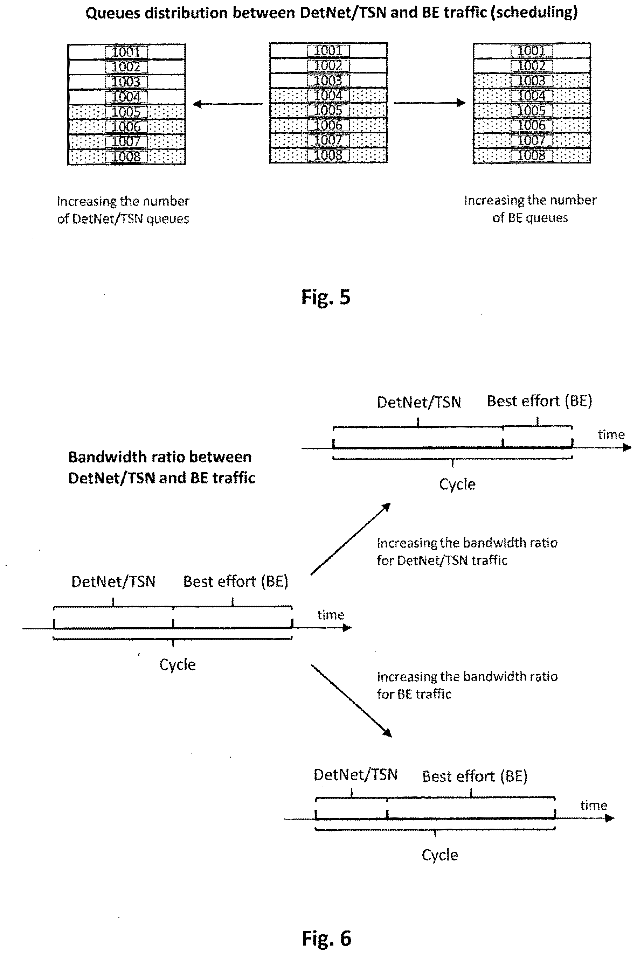

Fig. 5 illustrates a reconfiguration of resource distribution among traffic with guaranteed quality of service and best-effort traffic by changing the respective number of queues . As shown in Fig. 5, the number of queues can be changed by assigning more queues to deterministic traffic in order to serve more time-critical applications or to BE traffic if the time-critical traffic is low and BE traffic requires more fine-grained traffic management. In the figure, queues for QoS traffic are shown in an unshaded manner and queues for BE traffic are shown in a shaded manner.

In the example illustrated in Fig. 5, an initial configuration according to CSQF with three queues being configured for QoS traffic and five queues being configured for BE traffic is shown in the middle. Starting from the initial configuration, the number of queues for QoS traffic may be increased, as illustrated on the left, or decreased, as illustrated on the right. Even though the initial configuration is illustrated as a configuration according to CSQF, the initial queue repartition may be different therefrom. Further, although an increase or decrease of the number of queues by one is shown in Fig. 5, the number of queues for QoS traffic may be increased or decreased by two or more.

Fig. 6 illustrates dynamic reconfiguration of resource distribution among traffic with guaranteed quality of service and best-effort traffic by changing the bandwidth repartition. As shown in Fig. 6, the time cycle repartition may be changed by assigning a different amount of transmission time to either time-critical or BE traffic. This change has an impact on the bandwidth assigned to the two classes of traffic.

In the figure, the repartition of the transmission cycle is changed starting from a configuration according to CSQF, wherein the cycle period is associated in equal parts to QoS and BE traffic. Starting from this configuration, the ratio of the time period for QoS and BE traffic may be increased, as shown in the upper right part of the figure, or decreased, as shown in the lower right part of the figure. Even though the initial configuration is illustrated as a configuration according to CSQF, the initial cycle repartition may be different therefrom.

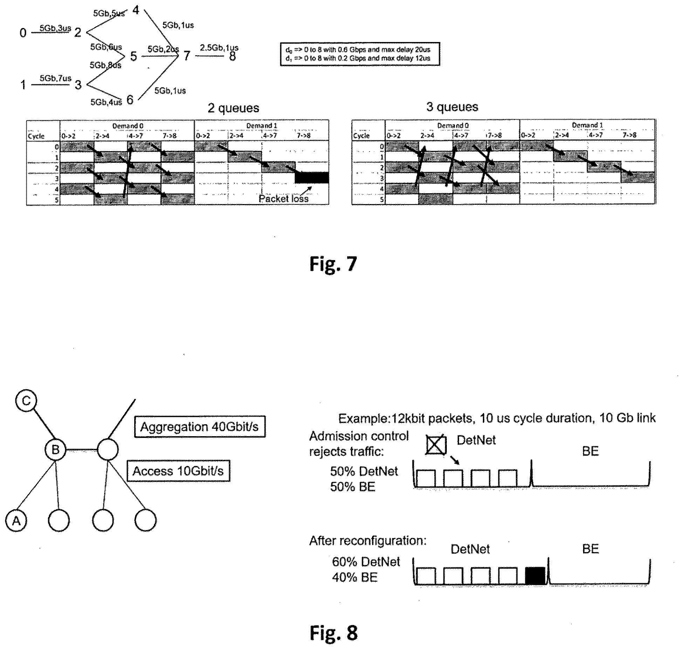

Advantages of dynamic reconfiguration of a resource distribution between QoS and BE traffic are illustrated in Figs. 7 and 8.

Fig. 7 illustrates a situation where an increased number of queues for traffic with guaranteed quality of service may facilitate accepting additional demands while reducing packet loss.

In the upper left part of Fig. 7, an exemplary network structure is illustrated with nodes 0 to 8 and respective links in between. For each link, corresponding bit rates and delay times are given. In Fig. 7, two time-critical demands do and di from source node 0 to destination node 8 via intermediate nodes 2, 4 and 7 are considered, each demand with its delay constraint. For illustrative purposes, it is assumed that in one cycle only one DetNet/TSN packet can be served.

A situation where two queues of each port are configured for DetNet/TSN traffic (i.e. QoS traffic) is shown in the lower left part of Fig. 7. If only 2 queues are available for QoS traffic (DetNet/TSN traffic), the demand do can be accepted into the network, while demand di is rejected as the packet would be lost at the destination node due to lack of resources.

Specifically, a packet of demand di may be transmitted from source node 0 to node 2 in cycle 0, from node 2 to node 4 in cycle 1, from node 4 to node 7 in cycle 2 and from node 7 to the destination node 8 in cycle 3. The packet flow is illustrated as shaded areas and corresponding arrows. The described path is an exemplary transmission path of a packet of the flow according to demand do. Other packet paths and transmission cycles are illustrated in Fig. 7 as well. The flow is shown in a cyclic manner.

Further, a packet of a second demand d₁, which may be transmitted from source node 0 to node 2 in cycle 0, from node 2 to node 4 in cycle 1 and from node 4 to node 7 in cycle 2 may be lost in cycle 3, as the connection between node 7 and destination node 8 provides only a lower transfer rate, as illustrated in the network structure.

However, in the case with 3 queues, which is illustrated in the lower right part of the figurethe packet of demand do is scheduled for transmission in two cycles at node 7. That is, the transmission of the packed of demand do is delayed for one cycle within node 7, which leaves room for the packets of demand di to pass and reach the destination node 8.

Specifically, in contrast to the situation with only two queues available for QoS traffic, a packet of demand do may be transmitted from node 7 to node 8 in cycle 4 rather than in cycle 3, such that transmission of a packet of demand di may be transmitted from node 7 to node 8 in cycle 3. This is achieved by the additional queue allowing for transmission of the packet of demand do within a cycle not immediately following the previous cycle. It is understood that this explicit description holds for packets transmitted from node 7 to node 8 in a cycle different from cycle 3 and/or 4.

Thus, by changing the number of queues configured for Qos traffic, a higher acceptance of demands for services with guaranteed QoS may be achieved.

Fig. 8 illustrates a situation where a reconfiguration of bandwidth distribution facilitates for accepting additional demands for traffic with guaranteed quality of service.

On the left side of the figure, an exemplary network structure with nodes A, Band C with connecting links is illustrated. It is assumed that links indicated with a bit rate of 10 Gb can accept up to four packets of QoS traffic within a cycle and the link indicated with a bit rate of 40 Gb can accept up to 16 packets of QoS traffic within a cycle, wherein the latter is not saturated, but provides space for further traffic. On the right side of the figure, cycle repartition (bandwidth repartition) between traffic with guaranteed QoS and BE traffic is illustrated. In the upper repartition, before reconfiguration, the cycle is partitioned in a 50/50 manner between QoS traffic and BE traffic. As the 10 Gb link, for instance between nodes B and A, can only accept 4 packets of QoS traffic within a cycle, additional traffic may be rejected due to a limitation of resources.

After reconfiguration, the 10 Gb link can accept five packets instead of four. The cycle repartition after reconfiguration is illustrated in the lower right part of the figure, wherein the portion of the cycle configured for QoS traffic is increased, such that five packets may be transmitted within a single cycle. As the 40 Gb link can still accept 16 packets of QoS traffic within a cycle, no jitter is added. In this example, the reconfiguration has no impact on packets already inside the network, as the cycle duration does not change. That is, in this specific example, no jitter is introduced on time-critical traffic, while assigning more resource to this latter.

Thus, according to the present disclosure, the following advantageous effect may be achieved:
- Adapting the resource redistribution allows to (i) improve DetNet/TSN (QoS) traffic acceptance and (ii) improve QoS for BE traffic.
- There are different ways to adapt to traffic evolution, namely a modification of queues distribution and a modification of the cycle repartition.

∘ Increasing the number of DetNet/TSN queues improves DetNet/TSN traffic acceptance.
∘ Increasing the number of BE queues allows for fine grained BE traffic scheduling, e.g., via HQoS or DiffServe.
∘ Increasing bandwidth (i.e., time cycle) for DetNet/TSN traffic improves DetNet/TSN traffic acceptance.
∘ Increasing bandwidth (i.e., time cycle) for BE traffic allows better BE traffic acceptance.

### Label distribution sequence

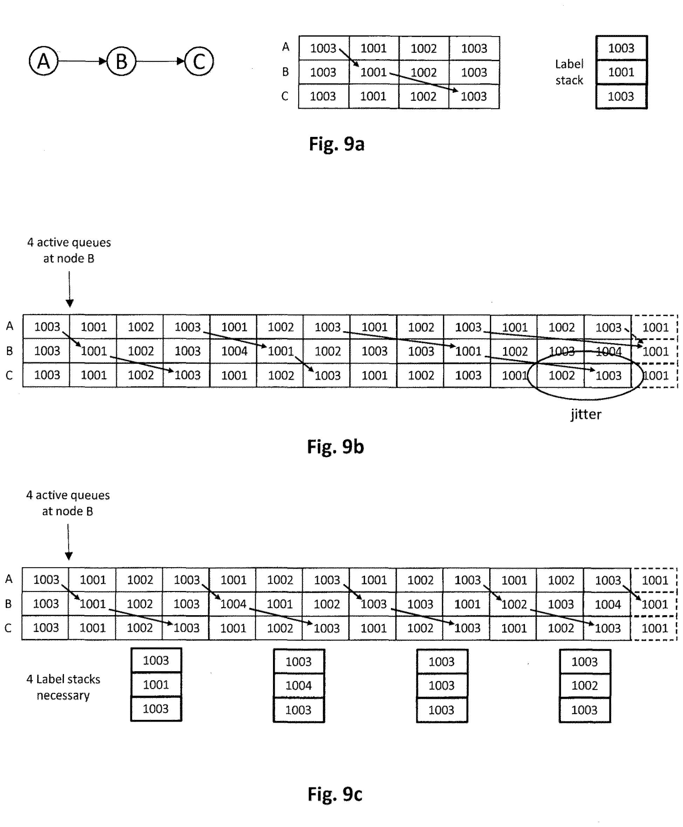

However, even though said advantages may be achieved by a reconfiguration of the resource distribution between QoS and BE service classes, applying the new configuration abruptly is not desirable, as this might introduce additional jitter and/or packet loss, which will be described with reference to Figs. 9a to 9c in the following.

Fig. 9a illustrates an initial situation before reconfiguration of resource distribution between traffic of guaranteed quality of service and best-effort traffic. On the left in Fig. 9a, an exemplary network structure including nodes A, B and C with links between A and B as well as between B and C is illustrated. In this example, node A acts as a source node transmitting data via intermediate node B to destination node C. In the illustrated example, three queues are available for QoS traffic in each node.

A set of labels, the label stack, is assigned to each packet of a flow in order to instruct the nodes on the path on the desired route of the packet. That is, the route of the flow is defined by the label stack. In particular, the label stack may indicate the series of queues to be utilized for each of the nodes A, B and C. Each intermediary node consumes its label. The label stack for the illustrated flow is shown on the right side of the figure and the corresponding path of an exemplary packet from A via B to C is shown in the middle part of the figure. Although the labels associated with each flow may contain information further to the sequence of queue, for illustrative purposes, the label stack is limited to definition of the queues in the Figures and the description.

Specifically, a packet is transmitted from queue 1003 of node A to queue 1001 of node B and, subsequently, from queue 1001 of node B to queue of node C. The label stack indicating the sequence of utilized queues is thus (1003, 1001, 1003).

In a case of an additional demand for QoS traffic, the number of queues of node B may be increased by one, for instance.

Fig. 9b exemplarily illustrates introduction of additional jitter in a case where a number of queues configured for traffic with guaranteed quality of service is increased without consideration of a label distribution sequence.

As indicated above, the number of queues of node B may be increased by one due to a demand for QoS traffic. For instance, the number of queues configured for QoS traffic is increased from three to four at a timing indicated with a vertical arrow in Fig. 9b. In each cycle, a single queue transmits its data packets to the next node according to the label stack. In a case where the label stack is maintained, i.e., the label stack (1003, 1001, 1003) is further utilized for defining the flow path, jitter may be introduced. In particular, due to the no longer synchronous sequence of active queues of nodes A to C, the arrival of a packet at the listener node C may be delayed, which is indicated with a circle in Fig. 9b. This delay is due to the label stack defining the path of a packet by specifying the utilized queues. As the queues are active in a round-robin manner, the active time of newly available queue 1004 of node B causes the delay.

Thus, when changing the distribution of resources between QoS and BE service classes, according to an embodiment, the control device calculates, for each entry node, a label distribution sequence indicating one or more label distributions (for instance, label stacks) with associated activation timing information so as to reduce jitter or packet loss.

Fig. 9c exemplarily illustrates reconfiguration of resources by changing the repartition of queues for traffic with guaranteed quality of service and best-effort traffic while providing a label distribution sequence according to an embodiment.

Just as for the example illustrated in Fig. 9b, the number of queues configured for QoS traffic of node B is increased from three to four. Further, the entry node A is provided by the control device with a sequence of label stacks together with associated activation timings such that the transfer of packets is no longer delayed due to the additional available resource at node B.

In particular, in the illustrated example, four label stacks are transmitted from a control device to entry node A. For instance, at cycle i, the label stack of the first packet is (1003, 1001, 1003). The new configuration (i.e. activation of 4 queues in node B) and the activation time (at cycle i+2) is transmitted by the control device to respective node. Further, the new label stacks for the next packets and respective timings (i.e. at cycle i+1) is transmitted to entry node A. With this label stack sequence, the label stacks (1003, 1004, 1003), (1003, 1003, 1003) and (1003, 1002, 1003) are used for the next transmitted packets. Thus, no jitter is introduced in the flow due to the additional queue available for QoS traffic in node B.

In other words, the source node is provided with label stacks to be utilized for packets to be transmitted via the intermediate node B, which is subject to resource reconfiguration. In order not to introduce jitter or packet loss, the label stacks indicate the new sequences of queues. Further, the sequence of label stacks is associated with timing information, wherein the timing information indicated an activation time (for instance, in terms of a number of cylces) of the label stacks. This facilitates for ensuring that packets arriving at the node subject to reconfiguration at the time of reconfiguration are associated with a label stack taking the new resource repartition into account. For this purpose, the transmission duration between the source node and the node subject to reconfiguration is taken into account so as to harmonize the arrival time of packets with a new label stack at the node subject to reconfiguration and the activation of the new configuration within said node.

Although in the example illustrated in Fig. 9c, a label distribution sequence is transmitted due to a reconfiguration including an change in the number of queues for QoS traffic, the present disclosure is not limited to this, and a label distribution sequence may be transmitted to an entry node in a case where the resource distribution is changed by changing the partitioning of a bandwidth between QoS and BE traffic. As illustrated in Fig. 8, for instance, an increased period configured for QoS traffic in a cycle allows for transmission of additional packets within the same cycle, such that a label distribution sequence with associated activation timing may reduce jitter or packet loss.

A control device according to an embodiment is a control device for a software programmable network. The software programmable network includes one or more nodes and supports traffic of guaranteed quality of service as well as best effort traffic with a predetermined resource distribution between guaranteed QoS service and BE service classes. The control device comprises circuitry which determines a new resource distribution between guaranteed QoS and BE service classes, wherein the new resource distribution is different from the predetermined resource distribution. Further, the new resource distribution is determined according to a demand for QoS service. Further, the processing circuitry calculates, for each of the nodes, a new configuration indicating the new resource distribution and calculated, for each entry node to the network among the one or more nodes, a label distribution sequence indicating one or more label distributions with associated activation timing information so as to reduce jitter or packet loss. Further, the control device comprises a transceiver transmitting the new configurations to respective nodes and transmitting the label distributions to respective entry nodes.

A switch device is a switch device for operating as a node in a software programmable network including one or more nodes and supporting traffic of guaranteed quality of service, QoS, and best-effort, BE, traffic with a predetermined resource distribution between guaranteed QoS and BE service classes. The switch device comprises a transceiver receiving and transmitting data packets according to a current configuration indicating a resource distribution between guaranteed QoS and BE service classes. Further, the transceiver receives a new configuration indicating a new resource distribution between guaranteed QoS and BE service classes different from the predetermined resource distribution. The switch device operating as a node further comprises processing circuitry configured to set the new configuration as the current configuration.

The switch device may operate as an entry node to the network. The device may receive a label distribution sequence indicating one or more label distributions with associated activation timing information. Further, the transceiver may receive and transmit data packets according to the received one or more label distributions and the associated activation timing information.

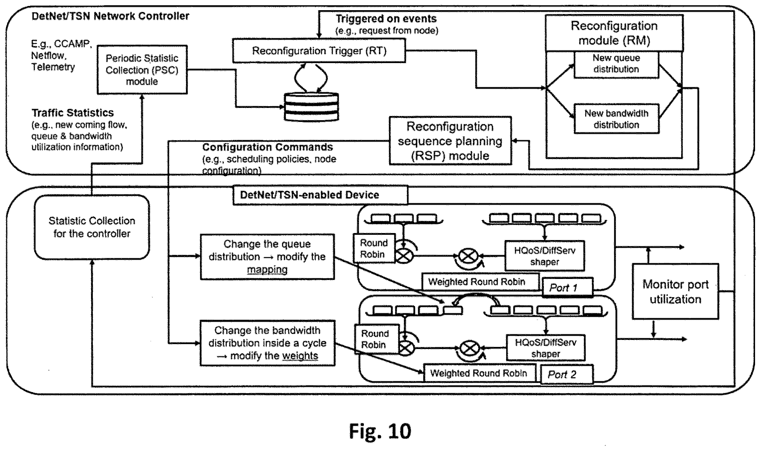

Fig. 10 is a diagram illustrating a controller and node architecture of DetNet/TSN-enabled devices.

The control device (DetNet/TSN Network Controller) may comprise a periodic statistic collection module PSC, a reconfiguration trigger module RT, a reconfiguration module RM as well as a reconfiguration sequence planning module RSP.

The control device (DetNet/TSN Network Controller) collects traffic statistics from the network using standard protocols such as CCAMP (Common Control and Measurement Plane), NetFlow or Telemetry by the PSC. By using the information stored or if solicited by external requests from nodes, the Reconfiguration Trigger (RT) of the controller can trigger a reconfiguration phase. The Reconfiguration Model (RM) computes a new resource distribution, for instance, a new queue and/or bandwidth distribution, that is used by the Reconfiguration Sequence Planning (RSP) module to compute a sequence of reconfiguration steps to reduce jitter and packet losses on ongoing traffic. The RSP may compute the sequence of reconfiguration steps to guarantee that no additional jitter and no packet losses are introduced on ongoing traffic.

This sequence is translated into node configurations and scheduling policies, i.e. label distributions, that may be sent to the DetNet/TSN nodes (switch device) via dedicated messages described later.

Once the DetNet node receives the new configurations, it adapts its resource distribution, for instance, its queue distribution, by modifying the time-critical and BE queue repartition, and its bandwidth distribution by changing the weights of the internal schedulers used to switch between transmissions of time-critical and BE traffic.

The DetNet/TSN-enabled node may also monitor port utilization and report collected statistics to the controller.

In the example illustrated in Fig. 10, the switch device (the DetNet/TSN enabled device) includes two ports, wherein the resource distribution between service classes with guaranteed QoS and BE is changed in port 2 by changing the queue distribution and the bandwidth distribution.

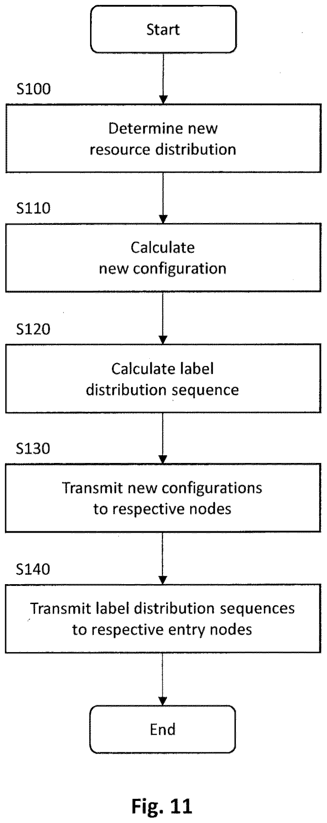

Fig. 11 is a flow diagram of a method, for a control device, for dynamic resource reconfiguration in a software programmable network according to an embodiment.

In step S100 a new resource distribution between guaranteed QoS and BE service classes different from a predetermined resource distribution is determined according to a demand for QoS service. This determination may be triggered by the reconfiguration trigger (RT) module deciding whether a reconfiguration is needed. This decision may be performed periodically on the basis of statistics or triggered on specific events, for instance, a request coming from a node. For instance, a new queue distribution and/or a bandwidth ratio may be determined according to a current and/or future demand for QoS service. That is, the reconfiguration module (RM) computes the new queue distribution and bandwidth ratio policy for ongoing DetNet/TSN flows without introducing additional jitter and packet losses.

Further in step S110, for each node of the network, a new configuration is calculated indicating the new resource distribution.

In step S120, a label distribution sequence indicating one or more label distributions with associated activation timings is calculated for each entry node to the network among the one or more nodes, so as to reduce jitter or packet loss. That is, based on the new resource distribution, the Reconfiguration Sequence Planning (RSP) module defines a reconfiguration strategy (i.e., a series of intermediate reconfiguration activities) to (i) avoid additional jitter and packet losses for ongoing flows in the transient phase and (ii) limit the duration of the transient phase.

In step S130, the new configurations are transmitted to respective nodes. For instance, the control device sends to DetNet/TSN devices (switches, nodes) a series of one or more intermediate configurations for resources distribution and corresponding time instants at which they must be activated.

In step S140, the label distribution sequences are transmitted to respective entry nodes. In particular, the control device may send to the DetNet/TSN source nodes a series of the configurations to distribute scheduling policies (i.e. label distributions, for instance, label stacks) and corresponding time instants at which they must be applied.

By providing the series of configurations and the time at which they become active, it is possible to reduce additional jitter and packet losses introduced into the network due to the reconfiguration of resource distribution.

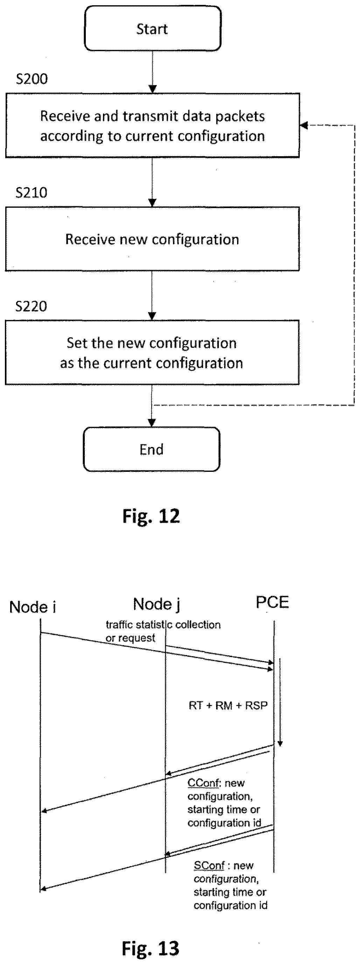

Fig. 12 is a flow diagram of a method, for a switch device, for dynamic resource reconfiguration in a software programmable network according to an embodiment. The switch device may serve as a node in the software programmable network.

In step S200, data packets according to a current configuration indicating a resource distribution between guaranteed QoS and BE service classes are transmitted and received. That is, the node device performs its dedicated tasks in transmitting data packets within the network according to its current configuration

In step S210, new configuration indicating a new resource distribution between guaranteed QoS and BE service classes different from the current resource distribution is received.

In step S220, the received new configuration is set as the current configuration. Subsequent to step S220, the node device may resume transmitting and receiving data packets within the network but nor according to the new configuration.

Fig. 13 is a schematic diagram illustrating messages transmitted between nodes and a control device of a software-programmable network for dynamic reconfiguration of resources.

The network nodes i and j, for example, transmit information indicating port utilization statistics to the PCE or CNC of the network. According to the method described above, using RT, RM and RSP, the control device determines a new configuration with respective staring time information and transmits said new configuration to nodes i and j in a message referred to as CConf. Further, PCE or CNC determines the scheduling and routing policies, i.e. the label distribution sequence with respective label stacks and activation timing information and transmits said label distribution sequence and starting timings to entry nodes in a message referred to as SConf.

The CConf message is a message that allows to configure the resources distribution. It also includes information on the starting time at which the new configuration will become active. It may be derived from NETCONF/YANG message used to configure the parameters of reserved bandwidth for DetNet and queue buffer, as proposed by X. Geng et al, "Deterministic Networking (DetNet) Topology YANG Model draft-ietf-detnet-topology-yang-00", version 0, January 14, 2019.

SConf is a message that allows to distribute the scheduling and routing policies (i.e., label stacks) to source nodes. It also includes information on the starting time at which the new configuration will become active. This information allows for implementing an effective network reconfiguration as it provides to each node the time (expressed in cycles, for instance) at which the configuration will become active.

As the reconfiguration may be computed for each packet in a flow, the distribution of the corresponding labels via SConf message may be costly if not implemented properly. An efficient implementation of SConf message supporting Segment Routing (SR) policy allows to reduce the cost. SConf may be generated as an extension of PCUpd (PC update request) message supporting SR policy and activation time. Assuming that the PCEP (Path Computation Element Protocol) session has been established between the Path Computation Element (PCE) and the Path Computation Client (PCC), i.e., the DetNet-enabled node, and the PCEP session is stateful RFC8231, as described in E. Crabbe et al.: "Path Computation Element Comunication Protocol (PCEP) Extensions for Stateful PCE", September 2017, doi:10.17487/RFC8231, or PCE-initiated RFC8281, as described in E. Crabbe et al.: "Path Computation Element Communication Protocol (PCEP) Extensions for PCE-Initiated LSP Setup in a Stateful PCE Model", December 2017, doi:10.17487/RFC8281, the PCE can distribute new SR labels to PCCs at any time through PCUpd messages without waiting for explicit requests from the nodes (via PCRep). In fact, the PCUpd does not need to follow the transmission of PCReq message from a PCC. Besides, PCUpd can be sent multiple times within a PCEP session to create a sequence of reconfiguration activities.

The PCUpd message may contain N label stacks corresponding to the new SR label stack for the first N successive packets that will be transmitted after rescheduling.

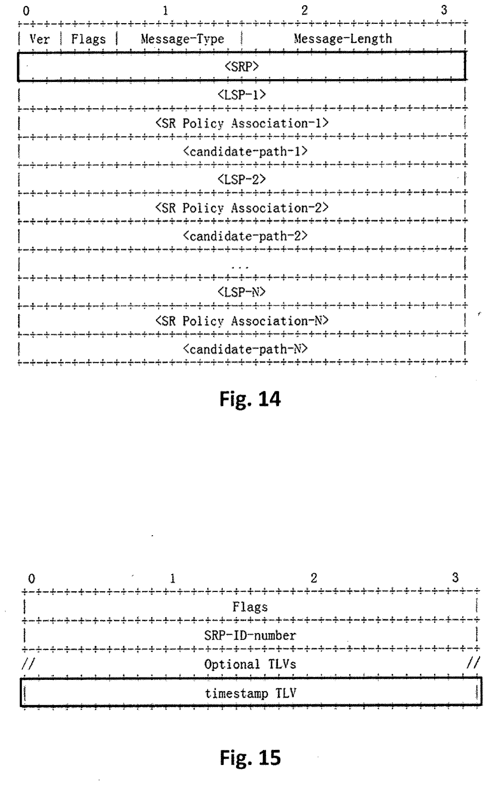

Fig. 14 is an exemplary structure of a message supporting a segment routing configuration. In particular, Fig. 14 shows the structure of the SConf message:
In particular, in order to define when the new configuration will become active, a new timestamp TLV may be added into the SRP (Stateful PCE Request Parameters) object to indicate the starting cycle at which the new SR label stack is to be used inside the devices. The format of the modified object is shown in Fig. 15.

Upon arrival of a set of new demands, which may be known current or predicted future demands, the control device may determine whether or not the number of queues on a set of nodes N' should be increased.

For instance, a future demand may be determined by applying artificial intelligence based prediction or linear regression. Specifically, a neural network determiner may be trained using history data of demands in combination with network structures in order to be able to predict a future demand for QoS service. Alternatively, a linear regression on past and current demands may be used to extrapolate for a future demand. However, determination of a future demand for QoS service is not limited to the described methods and any other suitable method may be applied.

In particular, the control device considers a set of new demands D' and determines whether or not the set of new demands D' can be accepted without reconfiguration. Details on the determination whether or not a demand can be accepted are given further below.

If the set of demands D' can be accepted without changing the number of queues, all demands are accepted. Otherwise, in a case where it is determined that the set of demands D' cannot be accepted, it is tested whether increasing the number of queues for QoS traffic on one node from among all nodes of the network by one allows for accepting the set of demands D'. The test may be performed for every one node selected from among all nodes of the network.

If it is determined that increasing the number of available queues of one node out of the plurality of nodes does not allow for accepting the set of demands D', it is tested whether the set of demands D' can be accepted by increasing the number of queues for QoS traffic of two nodes from among all nodes of the network by one. The test may be performed for any combination of two nodes selected from among all nodes of the network.

The number of nodes for which the number of available queues is increased may be increased by one until either a number of nodes is determined for which increasing the number of queues for QoS allows for accepting the set of demands D', or until the number of queues for QoS traffic is increased by one for every node so as to accept a maximum number of demands D'.

Additionally, it may be determined whether the number of queues for QoS traffic could be decreased on a set of nodes N'.

In particular, for each node u where one queue is not used for a given amount of cycles, it is added in N'. Further, for each node u where the demand can be regrouped on less queues, it is tested if there exists a multi-commodity rescheduling considering the reduction of one queue on the nodes of N'. Subsequently, u is then added in N'. Multi-commodity rescheduling is described below.

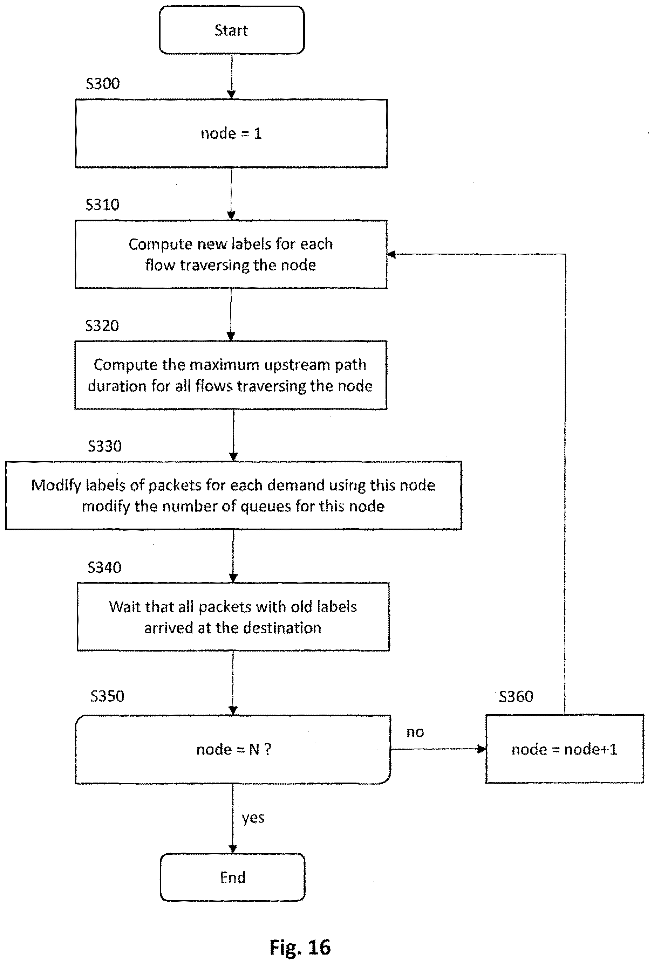

A reconfiguration planning algorithm according to an example not being part of the present invention is illustrated in Fig. 16. The reconfiguration planning algorithm is performed for each DetNet/TSN node within the software programmable network for which the number of queues is to be changed. The determination for which of the nodes the number of queues is changed is described further below.

In the following description of the method, N denotes the number of nodes for which the number of queues is changed.

In step S300, the current node is set to the first node.

In step S310, for each flow traversing the node, the new labels are computed.

In step S320, the maximum upstream path duration for all flows traversing the node is computed. In other words, the maximum path duration between all sources and the node is calculated. The maximum path duration may be expressed in terms of a number of cycles, for instance. In the following, the calculated maximum path duration from the sources to the node is denoted as *Lₘₐₓ.* The new configuration of resource distribution will be activated in *Lₘₐₓ* cycles.

In step S330, the labels for each demand using the node are modified. In particular, when *Lₛ* denotes the path duration between a source s and the node in terms of a number of cycles, the new labels are modified in cycles (*Lₘₐₓ* - *Lₛ*). With the modification of the labels within said specified cycles, it is ensured that the packets arrive at the node with the correct labels when the new resource configuration is activated, that is, when the number of queues available for QoS traffic for this node is modified.

In step S340, it is waited for *Lₛₜ* cycles, wherein *Lₛₜ* denoted the maximum path duration between all source nodes and al destinations via the node.

In step S350, it is determined whether new labels have been computed for all nodes, that is, it is determined whether the current node is the last node N. If the current node is the last node, the method terminates. If the current node is not the last node N, the node index is increased by 1 in step S360 and the method continues to step S 310.

In other words, the algorithm consists in (i) listing a sequence of nodes to be reconfigured, (ii) changing the number of queues for the considered node and the SR labels of the incoming packets, (iii) waiting that no old packets appear in the network anymore, and (iv) continuing with the next node.

In order to compute a path for a new or predicted demand considering a different number of queues in a node, a Depth-First Search (DFS) algorithm may be used by considering N-1 replica of each node, where N is the total number of queues available in this node. This method applies to single demand computation.

Depth-first-search is an exemplary algorithm for traversing or searching tree or graph data structures and may be applied to determining possible flow paths in a network. The algorithm starts at the source node and explores as far as possible along each branch. Then the algorithm backtracks until it finds an unexplored path, and then explores it.

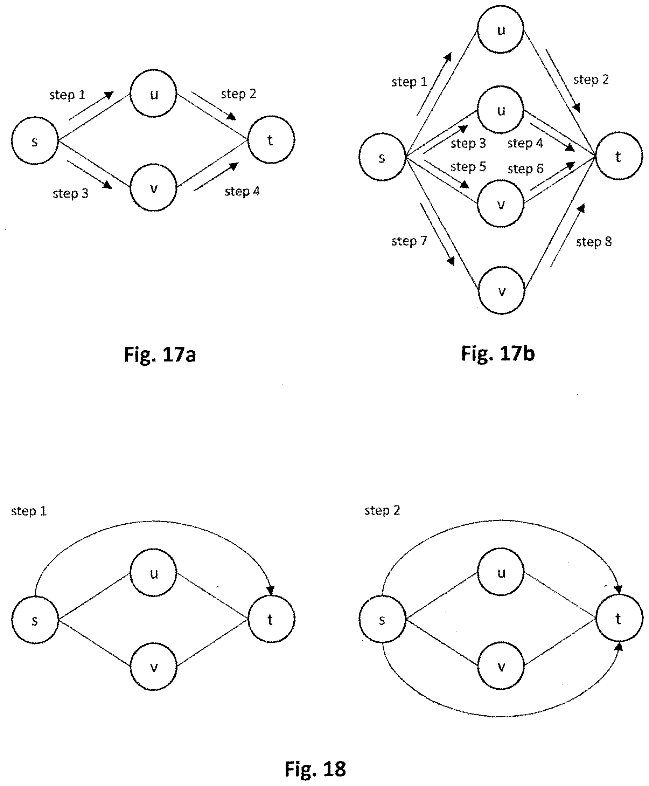

Fig. 17a illustrates a routing and scheduling algorithm for computing a path for a demand using a depth-first search algorithm without scheduling. According to the DFS algorithm, a path is computed by exploring the network structure starting from a source node s and exploring the network via node *u* to destination node *t.* Subsequently, it is backtracked and explored from source s via node v to destination node t.

Fig. 17b illustrates a routing and scheduling algorithm for computing a path for a demand using a depth-first search algorithm by considering replicas of each mode according to the number of available queues of the respective nodes according to an example not being part of the present invention. In this example, replicas of each node are generated for DFS according to the number of available queues for QoS traffic. In particular, N-1 replicas of each node are generated, wherein N denotes the number of queues configured for QoS traffic. In the illustrated example, two queues are configured for QoS traffic in nodes s and t, whereas three nodes are configured for QoS traffic in nodes u and v.

In order to solve the multi-commodity flow problem considering the scheduling arising in a case where paths for multiple demands are to be computed, the method illustrated in Fig. 17b can be executed sequentially over all the new and/or predicted demands. This method applies to the multicommodity flow problem. The mechanism is shown in Fig. 18.

In a first step, a path for the first demand of traffic between source node s and destination node t is calculated according to above-described DFS algorithm, for instance. In a second step, a path for a second demand is calculated from *s* to *t*, wherein the resources required by the first demand are taken into account. That is, the remaining capacity of the network nodes is considered when performing the second path computation.

Although in this example, sequential computation of paths for demands is described for two demands, the present disclosure is not limited to this, and any number of paths for any number of demands may be computed in a sequential order.

In order to change the current scheduling decisions, the above-described methods for calculating transmission paths can be executed sequentially for new and/or predicted demands while keeping the current paths for all of the existing demands fixed.

## Claims

1. A control device for a software programmable network comprising one or more nodes, wherein the control device comprises:
a processing circuitry configured to
determine a new resource distribution partioning resources between guaranteed QoS and BE service
classes different from predetermined resource distribution according to a demand for QoS service;
calculate, for each node of the one or more nodes, a new configuration indicating the new resource distribution; and
obtain, for each entry node to the network among the one or more nodes, a label distribution sequence indicating one or more new label distributions with associated
activation timing information; and
a transceiver configured to
transmit the new configurations to respective nodes; and
transmit the label distribution sequences to respective entry nodes.

2. The control device according to claim 1, wherein
the new configurations indicate a repartition of queues configured for guaranteed QoS and BE service classes.

3. The control device according to claim 1 or 2, wherein
the new configurations indicate a repartition of bandwidth for guaranteed QoS and BE service classes.

4. The control device according to any one of claims 1 to 3, wherein
the processing circuitry is configured to calculate a reconfiguration sequence indicating one or more configurations with associated second activation timing information for each node
and
the transceiver is configured to transmit the reconfiguration sequences to respective nodes.

5. The control device according to any one of claims 1 to 4, wherein
the transceiver is configured to receive utilization data from the one or more nodes; and
the processing circuitry is configured to determine the new resource distribution on basis of the received utilization data.

6. The control device according to any one of claims 1 to 5, wherein
the processing circuitry is configured to
determine a current and/or future demand for QoS service; and
determine the new resource distribution according to the determined current and/or future demand.

7. The control device according to any one of claims 1 to 6, wherein
the transceiver is configured to receive a reconfiguration request from one of the one or more nodes; and
the processing circuitry is configured to determine the new resource distribution when the reconfiguration request is received.

8. A switch device for a software programmable network comprising one or more nodes, the switch device being one of said one or more nodes, wherein the switch device comprising:
a transceiver configured to
receive and transmit data packets according to a current configuration indicating a resource distribution partitioning resources between guaranteed QoS and BE service classes; and
receive a new configuration from a control device indicating a new resource distribution partitioning resources between guaranteed QoS and BE service classes different from the predetermined resource distribution; and
a processing circuitry configured to set the new configuration as the current configuration; and
wherein
the switch device is configured for operating as an entry node to the network; and
the transceiver is configured to receive a label distribution sequence from the control device indicating one or more new label distributions
with associated activation timing information; and
receive and transmit data packets according to the received one or more new label distributions and the associated activation timing information.

9. The switch device according to claim 8, wherein
the transceiver is configured to receive a reconfiguration sequence from the control device indicating a sequence of one or more configurations with associated second activation timing information; and
the processing circuitry is configured to set the one or more configurations indicated by the reconfiguration sequence as the current configuration according to the associated second activation timing information.

10. The switch device according to any one of claims 8 to 9, wherein
the processing circuitry is configured to monitor a port utilization; and
the transceiver is configured to transmit utilization data to the control device indicating the port utilization

11. The switch device according to any one of claims 8 to 10, wherein
the processing circuitry is configured to
determine whether a new resource distribution between guaranteed QoS and BE service classes is required; and
the transceiver is configured to transmit a reconfiguration request to the control device.

12. A method for dynamic resource reconfiguration in a software programmable network comprising one or more nodes, the method performed by a control device, the method comprising:
determining (S100) a new resource distribution partitioning resources between guaranteed QoS and BE service classes different from predetermined resource distribution according to a demand for QoS service;
calculating (S110), for each node of the one or more nodes, a new configuration indicating the new resource distribution;
obtaining (S120), for each entry node to the network among the one or more nodes, a label distribution sequence indicating one or more new label distributions with associated activation timing information so as to reduce jitter or packet loss;
transmitting (S130) the new configurations to respective nodes; and
transmitting (S140) the label distribution sequences to respective entry nodes.

13. A method for dynamic resource reconfiguration for a software programmable network comprising one or more nodes, the method performed by a switch device being one of said one or more nodes, the method comprising:
receiving and transmitting (S200) data packets according to a current configuration indicating a resource distribution partitioning resources between guaranteed QoS and BE service classes
receiving (S210) a new configuration from a control device indicating a new resource distribution partitioning resources between guaranteed QoS and BE service classes different from the predetermined resource distribution; and
setting (S220) the new configuration as the current configuration; and
the method further comprising:
the switch device being configured for operating as an entry node to the network;
receiving a label distribution sequence from the control device indicating one or more new label distributions
with associated activation timing information; and
receiving and transmitting data packets according to the received one or more label distributions and the associated activation timing information.

14. A computer-readable storage medium comprising instructions, which, when executed by a computer, cause the computer to carry out the method of claim 12 or 13.

## Patentansprüche

1. Steuervorrichtung für ein softwareprogrammierbares Netzwerk, umfassend einen oder mehrere Knoten, wobei die Steuervorrichtung Folgendes umfasst:
eine Verarbeitungsschaltung, die dazu konfiguriert ist,
eine neue Ressourcenverteilung zu bestimmen, welche Ressourcen zwischen garantierten QoS- und BE-Dienstklassen aufteilt und sich von einer vorbestimmten Ressourcenverteilung gemäß einer Nachfrage nach einem QoS-Dienst unterscheidet;
für jeden Knoten des einen oder der mehreren Knoten eine neue Konfiguration zu berechnen, welche die neue Ressourcenverteilung angibt; und
für jeden Einstiegsknoten zu dem Netzwerk unter dem einen oder den mehreren Knoten eine Etikettenverteilungssequenz zu erlangen, die eine oder mehrere neue Etikettenverteilungen mit zugehörigen Aktivierungszeitinformationen angibt; und
einen Sendeempfänger, der dazu konfiguriert ist,
die neuen Konfigurationen an jeweilige Knoten zu übertragen; und
die Etikettenverteilungssequenzen an jeweilige Einstiegsknoten zu übertragen.

2. Steuervorrichtung nach Anspruch 1, wobei
die neuen Konfigurationen eine Neuaufteilung der für garantierte QoS- und BE-Dienstklassen konfigurierten Warteschlangen angeben.

3. Steuervorrichtung nach Anspruch 1 oder 2, wobei
die neuen Konfigurationen eine Neuaufteilung von Bandbreite für garantierte QoS- und BE-Dienstklassen angeben.

4. Steuervorrichtung nach einem der Ansprüche 1 bis 3, wobei die Verarbeitungsschaltung dazu konfiguriert ist, eine Rekonfigurationssequenz zu berechnen, die eine oder mehrere Konfigurationen mit zugehörigen zweiten Aktivierungszeitinformationen für jeden Knoten angibt, und
der Sendeempfänger dazu konfiguriert ist, die Rekonfigurationssequenzen an jeweilige Knoten zu übertragen.

5. Steuervorrichtung nach einem der Ansprüche 1 bis 4, wobei
der Sendeempfänger dazu konfiguriert ist, Nutzungsdaten von dem einen oder den mehreren Knoten zu empfangen; und
die Verarbeitungsschaltung dazu konfiguriert ist, die neue Ressourcenverteilung auf Basis der empfangenen Nutzungsdaten zu bestimmen.

6. Steuervorrichtung nach einem der Ansprüche 1 bis 5, wobei die Verarbeitungsschaltung dazu konfiguriert ist,
eine aktuelle und/oder zukünftige Nachfrage nach QoS-Diensten zu bestimmen; und
die neue Ressourcenverteilung gemäß der bestimmten aktuellen und/oder zukünftigen Nachfrage zu bestimmen.

7. Steuervorrichtung nach einem der Ansprüche 1 bis 6, wobei der Sendeempfänger dazu konfiguriert ist, eine Rekonfigurationsanforderung von einem des einen oder der mehreren Knoten zu empfangen; und
die Verarbeitungsschaltung dazu konfiguriert ist, die neue Ressourcenverteilung zu bestimmen, wenn die Rekonfigurationsanforderung empfangen wird.

8. Schaltvorrichtung für ein softwareprogrammierbares Netzwerk, umfassend einen oder mehrere Knoten umfasst, wobei die Schaltvorrichtung einer des einen oder der mehreren Knoten ist, wobei die Schaltvorrichtung Folgendes umfasst:
einen Sendeempfänger, der dazu konfiguriert ist,
Datenpakete gemäß einer aktuellen Konfiguration zu empfangen und zu übertragen, die eine Ressourcenverteilung angibt, welche Ressourcen zwischen garantierten QoS- und BE-Dienstklassen aufteilt; und
eine neue Konfiguration von einer Steuervorrichtung zu empfangen, die eine neue Ressourcenverteilung angibt, welche Ressourcen zwischen QoS- und BE-Dienstklassen aufteilt und welche sich von der vorbestimmten Ressourcenverteilung unterscheidet; und
eine Verarbeitungsschaltung, die dazu konfiguriert ist, die neue Konfiguration als die aktuelle Konfiguration festzulegen; und
wobei
die Schaltvorrichtung zum Betreiben als ein Eintrittsknoten zu dem Netzwerk konfiguriert ist; und
der Sendeempfänger dazu konfiguriert ist,
eine Etikettenverteilungssequenz von der Steuervorrichtung zu empfangen, die eine oder mehrere neue Etikettenverteilungen mit zugehörigen Aktivierungszeitinformationen angibt; und
Datenpakete gemäß der empfangenen einen oder mehreren neuen Etikettenverteilungen und den zugehörigen Aktivierungszeitinformationen zu empfangen und zu übertragen.

9. Schaltvorrichtung nach Anspruch 8, wobei
der Sendeempfänger dazu konfiguriert ist, eine Rekonfigurationssequenz von der Steuervorrichtung zu empfangen, die eine Sequenz von einer oder mehreren Konfigurationen mit zugehörigen zweiten Aktivierungszeitinformationen angibt; und
die Verarbeitungsschaltung dazu konfiguriert ist, die eine oder mehreren Konfigurationen, die durch die Rekonfigurationssequenz angegeben werden, als die aktuelle Konfiguration gemäß den zugehörigen zweiten Aktivierungszeitinformationen festzulegen.

10. Schaltvorrichtung nach einem der Ansprüche 8 bis 9, wobei
die Verarbeitungsschaltung dazu konfiguriert ist, eine Port-Auslastung zu überwachen; und
der Sendeempfänger dazu konfiguriert ist, Auslastungsdaten, welche die Port-Auslastung angeben, an die Steuervorrichtung zu übertragen.

11. Schaltvorrichtung nach einem der Ansprüche 8 bis 10, wobei
die Verarbeitungsschaltung dazu konfiguriert ist,
zu bestimmen, ob eine neue Ressourcenverteilung zwischen garantierten QoS- und BE-Dienstklassen erforderlich ist; und
der Sendeempfänger dazu konfiguriert ist, eine Rekonfigurationsanforderung an die Steuervorrichtung zu übertragen.

12. Verfahren zur dynamischen Ressourcenrekonfiguration in einem softwareprogrammierbaren Netzwerk, umfassend einen oder mehrere Knoten, wobei das Verfahren von einer Steuervorrichtung durchgeführt wird, wobei das Verfahren Folgendes umfasst:
Bestimmen (S100) einer neuen Ressourcenverteilung, welche Ressourcen zwischen garantierten QoS- und BE-Dienstklassen aufteilt und sich von einer vorbestimmten Ressourcenverteilung gemäß einer Nachfrage nach einem QoS-Dienst unterscheidet;
Berechnen (S110), für jeden Knoten des einen oder der mehreren Knoten, einer neuen Konfiguration, welche die neue Ressourcenverteilung angibt;
Erlangen (S120), für jeden Einstiegsknoten zu dem Netzwerk unter dem einen oder den mehreren Knoten, einer Etikettenverteilungssequenz, die eine oder mehrere neue Etikettenverteilungen mit zugehörigen Aktivierungszeitinformationen angibt, um Jitter oder Paketverlust zu verringern;
Übertragen (S130) der neuen Konfigurationen an jeweilige Knoten; und
Übertragen (S140) der Etikettenverteilungssequenzen an jeweilige Einstiegsknoten.

13. Verfahren zur dynamischen Ressourcenrekonfiguration für ein softwareprogrammierbares Netzwerk, umfassend einen oder mehrere Knoten, wobei das Verfahren von einer Schaltvorrichtung durchgeführt wird, die einer des einen oder der mehreren Knoten ist, wobei das Verfahren Folgendes umfasst:
Empfangen und Übertragen (S200) von Datenpaketen gemäß einer aktuellen Konfiguration, die eine Ressourcenverteilung angibt, welche Ressourcen zwischen garantierten QoS- und BE-Dienstklassen aufteilt;
Empfangen (S210) einer neuen Konfiguration von einer Steuervorrichtung, die eine neue Ressourcenverteilung angibt, welche Ressourcen zwischen garantierten QoS- und BE-Dienstklassen aufteilt und sich von der vorbestimmten Ressourcenverteilung unterscheidet; und
Einstellen (S220) der neuen Konfiguration als die aktuelle Konfiguration; und
wobei das Verfahren ferner Folgendes umfasst:
die Schaltvorrichtung, welche zum Betreiben als ein Eintrittsknoten zu dem Netzwerk konfiguriert ist;
Empfangen einer Etikettenverteilungssequenz von der Steuervorrichtung, die eine oder mehrere neue Etikettenverteilungen mit zugehörigen Aktivierungszeitinformationen angibt; und
Empfangen und Übertragen von Datenpaketen gemäß der empfangenen einen oder mehreren Etikettenverteilungen und den zugehörigen Aktivierungszeitinformationen.

14. Computerlesbares Speichermedium, umfassend Anweisungen, welche bei Ausführung durch einen Computer den Computer veranlassen, das Verfahren nach Anspruch 12 oder 13 durchzuführen.

## Revendications

1. Dispositif de commande pour un réseau programmable par logiciel comprenant un ou plusieurs noeuds, dans lequel le dispositif de commande comprend :
un circuit de traitement configuré pour
déterminer une nouvelle distribution de ressources partitionnant des ressources entre des classes de service QoS et BE garanties différentes de la distribution de ressources prédéterminée en fonction d'une demande de service QoS ;
calculer, pour chaque noeud des un ou plusieurs noeuds, une nouvelle configuration indiquant la nouvelle distribution de ressources ; et
obtenir, pour chaque noeud d'entrée au réseau parmi les un ou plusieurs noeuds, une séquence de distribution d'étiquettes indiquant une ou plusieurs nouvelles distributions d'étiquettes avec des informations de synchronisation d'activation associées ; et
un émetteur-récepteur configuré pour
transmettre les nouvelles configurations aux noeuds respectifs ; et
transmettre les séquences de distribution d'étiquettes aux noeuds d'entrée respectifs.

2. Dispositif de commande selon la revendication 1, dans lequel les nouvelles configurations indiquent une répartition des files d'attente configurées pour les classes de service QoS et BE garanties.

3. Dispositif de commande selon la revendication 1 ou 2, dans lequel
les nouvelles configurations indiquent une répartition de bande passante pour les classes de service QoS et BE garanties.

4. Dispositif de commande selon l'une quelconque des revendications 1 à 3, dans lequel
les circuits de traitement sont configurés pour calculer une séquence de reconfiguration indiquant une ou plusieurs configurations avec des secondes informations de synchronisation d'activation associées pour chaque noeud et l'émetteur-récepteur est configuré pour transmettre les séquences de reconfiguration aux noeuds respectifs.

5. Dispositif de commande selon l'une quelconque des revendications 1 à 4, dans lequel
l'émetteur-récepteur est configuré pour recevoir des données d'utilisation provenant des un ou plusieurs noeuds ; et
les circuits de traitement sont configurés pour déterminer la nouvelle distribution de ressources sur la base des données d'utilisation reçues.

6. Dispositif de commande selon l'une quelconque des revendications 1 à 5, dans lequel
les circuits de traitement sont configurés pour
déterminer une demande actuelle et/ou future de service QoS ; et
déterminer la nouvelle distribution de ressources en fonction de la demande actuelle et/ou future déterminée.

7. Dispositif de commande selon l'une quelconque des revendications 1 à 6, dans lequel
l'émetteur-récepteur est configuré pour recevoir une demande de reconfiguration provenant d'un des un ou plusieurs noeuds ; et
les circuits de traitement sont configurés pour déterminer la nouvelle distribution de ressources lorsque la demande de reconfiguration est reçue.

8. Dispositif de commutation pour un réseau programmable par logiciel comprenant un ou plusieurs noeuds, le dispositif de commutation étant l'un desdits un ou plusieurs noeuds, dans lequel le dispositif de commutation comprenant :
un émetteur-récepteur configuré pour
recevoir et transmettre des paquets de données selon une configuration actuelle indiquant une distribution de ressources partitionnant des ressources entre des classes de service QoS et BE garanties ; et
recevoir une nouvelle configuration provenant d'un dispositif de commande indiquant une nouvelle distribution de ressources partitionnant des ressources entre des classes de service QoS et BE garanties différentes de la distribution de ressources prédéterminée ; et
un circuit de traitement configuré pour définir la nouvelle configuration comme configuration actuelle ; et
dans lequel
le dispositif de commutation est configuré pour fonctionner comme un noeud d'entrée au réseau ; et
l'émetteur-récepteur est configuré pour
recevoir une séquence de distribution d'étiquettes provenant du dispositif de commande indiquant une ou plusieurs nouvelles distributions d'étiquettes avec des informations de synchronisation d'activation associées ; et
recevoir et transmettre des paquets de données en fonction des une ou plusieurs nouvelles distributions d'étiquettes reçues et des informations de synchronisation d'activation associées.

9. Dispositif de commutation selon la revendication 8, dans lequel
l'émetteur-récepteur est configuré pour recevoir une séquence de reconfiguration du dispositif de commande indiquant une séquence d'une ou de plusieurs configurations avec des secondes informations de synchronisation d'activation associées ; et
les circuits de traitement sont configurés pour définir les une ou plusieurs configurations indiquées par la séquence de reconfiguration comme configuration actuelle en fonction des secondes informations de synchronisation d'activation associées.

10. Dispositif de commutation selon l'une quelconque des revendications 8 et 9, dans lequel
les circuits de traitement sont configurés pour surveiller une utilisation de port ; et
l'émetteur-récepteur est configuré pour transmettre des données d'utilisation au dispositif de commande indiquant l'utilisation du port.

11. Dispositif de commutation selon l'une quelconque des revendications 8 à 10, dans lequel
les circuits de traitement sont configurés pour déterminer si une nouvelle distribution de ressources entre les classes de service QoS et BE garanties est requise ; et
l'émetteur-récepteur est configuré pour transmettre une demande de reconfiguration au dispositif de commande.

12. Procédé de reconfiguration dynamique de ressources dans un réseau programmable par logiciel comprenant un ou plusieurs noeuds, le procédé étant exécuté par un dispositif de commande, le procédé comprenant :
la détermination (S100) d'une nouvelle distribution de ressources partitionnant des ressources entre des classes de service QoS et BE garanties différentes de la distribution de ressources prédéterminée en fonction d'une demande de service QoS ;
le calcul (S110), pour chaque noeud des un ou plusieurs noeuds, d'une nouvelle configuration indiquant la nouvelle distribution de ressources ;
l'obtention (S120), pour chaque noeud d'entrée au réseau parmi les un ou plusieurs noeuds, d'une séquence de distribution d'étiquettes indiquant une ou plusieurs nouvelles distributions d'étiquettes avec des informations de synchronisation d'activation associées de manière à réduire l'instabilité ou la perte de paquets ;
la transmission (S130) des nouvelles configurations aux noeuds respectifs ; et
la transmission (S140) des séquences de distribution d'étiquettes aux noeuds d'entrée respectifs.

13. Procédé de reconfiguration dynamique de ressources pour un réseau programmable par logiciel comprenant un ou plusieurs noeuds, le procédé exécuté par un dispositif de commutation étant l'un desdits un ou plusieurs noeuds, le procédé comprenant :
la réception et la transmission (S200) de paquets de données selon une configuration actuelle indiquant une distribution de ressources partitionnant des ressources entre des classes de service QoS et BE garanties ;
la réception (S210) d'une nouvelle configuration d'un dispositif de commande indiquant une nouvelle distribution de ressources partitionnant des ressources entre des classes de service QoS et BE garanties différentes de la distribution de ressources prédéterminée ; et
la définition (S220) de la nouvelle configuration comme configuration actuelle ; et
le procédé comprenant en outre :
le dispositif de commutation étant configuré pour fonctionner comme un noeud d'entrée au réseau ;
la réception d'une séquence de distribution d'étiquettes provenant du dispositif de commande indiquant une ou plusieurs nouvelles distributions d'étiquettes avec des informations de synchronisation d'activation associées ; et
la réception et la transmission de paquets de données en fonction des une ou plusieurs nouvelles distributions d'étiquettes reçues et des informations de synchronisation d'activation associées.

14. Support de stockage lisible par ordinateur comprenant des instructions qui, lorsqu'elles sont exécutées par un ordinateur, amènent l'ordinateur à mettre en œuvre le procédé selon l'une quelconque des revendications 12 et 13.
